# EUROPÄISCHE PATENTANMELDUNG

(11) **EP 2 546 964 A2**
(43) Veröffentlichungstag der Anmeldung: **16.01.2013**
(21) Anmeldenummer: 12174418.9
(22) Anmeldetag: 29.06.2012
(51) Int. Cl.: H02K 16/02

(54) **Elektrische Maschine mit zwei Rotoren, sowie Antriebseinheit und Fahrzeug mit einer solchen Maschine**

(30) Priorität: 11.07.2011 DE 102011107074
(71) Anmelder: Magna Steyr Fahrzeugtechnik AG & Co KG, 8041 Graz (AT)
(72) Erfinder: Kassler, Helmut, 8570 Voitsberg (AT)
(74) Vertreter: Rausch, Gabriele

(57) **Zusammenfassung**

Es wird eine elektrische Maschine (1a..1c) angegeben, welche wenigstens einen Stator (2a, 2b) und zumindest zwei gegenüber dem Stator (2a, 2b) drehbar gelagerte und voneinander unabhängig drehbare Rotoren (5a, 5b) umfasst. Die Rotoren (5a, 5b) sind dabei auf einer gemeinsamen, alle Rotoren (5a, 5b) umspannenden Welle (7a..7c) angeordnet. Darüber hinaus wird eine Antriebseinheit für ein Kraftfahrzeug sowie ein Kraftfahrzeug mit einer solchen elektrischen Maschine (1a..1c) angegeben.

## Beschreibung

### TECHNISCHES GEBIET

Die Erfindung betrifft eine elektrische Maschine, umfassend wenigstens einen Stator und zumindest zwei gegenüber dem Stator drehbar gelagerte und voneinander unabhängig drehbare Rotoren. Weiterhin betrifft die Erfindung eine Antriebseinheit für ein Kraftfahrzeug, mit einer elektrischen Maschine der genannten Art, welche zum Antrieb von zwei Rädern des Kraftfahrzeugs konfiguriert ist. Schließlich betrifft die Erfindung ein Kraftfahrzeug mit mehreren Rädern und mit einer elektrischen Maschine der genannten Art, welche zum Antrieb von zwei Rädern des Kraftfahrzeugs konfiguriert ist.

### STAND DER TECHNIK

Elektrische Maschinen der genannten Art finden sich in den beispielhaft angeführten Schriften DE 42 36 093 A1, DE 202 01 379 U1, DE 44 34 237 A1 und JP 2007224979. Diese elektrischen Maschinen weisen völlig getrennte Sub-Maschinen (beinhaltend jeweils einen Rotor) auf. Insbesondere hat jede Sub-Maschine eine eigene Welle.

Nachteilig an dieser Bauweise ist, dass die elektrischen Maschinen nach dem Stand der Technik relativ voluminös sind, da ja zwischen den Sub-Maschinen ein Lagerschild vorzusehen ist, welches die Lager für die erwähnten Wellen trägt. Darüber hinaus werden diese Lager stark belastet, da in jedem Betriebszustand der elektrischen Maschine ein Drehzahlunterschied zwischen Lagerschild und Welle vorliegt und die Lager somit schnell verschleißen, beziehungsweise entsprechend stark dimensioniert werden müssen.

### OFFENBARUNG DER ERFINDUNG

Aufgabe der Erfindung ist es daher, eine verbesserte elektrische Maschine, eine verbesserte Antriebseinheit für ein Kraftfahrzeug sowie ein verbessertes Fahrzeug anzugeben. Insbesondere soll die Baugröße einer solchen Maschine bei gleicher Leistung verringert werden. Zudem soll die Lebensdauer einer Lagerung einer Welle der elektrischen Maschine erhöht werden.

Die Aufgabe der Erfindung wird mit einer elektrischen Maschine der eingangs genannten Art gelöst, bei der die Rotoren auf einer gemeinsamen, alle Rotoren umspannenden Welle angeordnet sind.

Weiterhin wird die Aufgabe der Erfindung durch eine Antriebseinheit für ein Kraftfahrzeug gelöst, welche eine erfindungsgemäße elektrische Maschine umfasst, die zum Antrieb von zwei Rädern des Kraftfahrzeugs konfiguriert ist.

Schließlich wird die Erfindung durch ein Kraftfahrzeug mit mehreren Rädern gelöst, umfassend zumindest eine erfindungsgemäße elektrische Maschine, die zum Antrieb von zwei Rädern des Kraftfahrzeugs konfiguriert ist.

An dieser Stelle wird angemerkt, dass die gemeinsame Welle nicht zwangsläufig ein Drehmoment überträgt. Im eigentlichen Sinne würde es sich in solchen Fällen daher um eine "Achse" und keine "Welle" handeln. Aus Gründen der Übersichtlichkeit wird im Folgenden jedoch stets der Begriff "Welle" verwendet, auch wenn diese kein Drehmoment überträgt. Der Begriff "Welle" wäre in diesen Fällen demzufolge gedanklich durch den Begriff "Achse" zu ersetzen.

Der Begriff "umspannen" bedeutet nicht, dass die gemeinsame Welle gleich lang wie die Rotoren sein oder diese sogar überragen muss. Die gemeinsame Welle kann auch kürzer sein und nur teilweise in die Rotoren hineinragen. Die gemeinsame Welle besteht zudem nicht zwangsläufig aus nur einem Bauteil, sondern kann auch aus mehreren Bauteilen bestehen.

Durch die Erfindung werden die Nachteile des eingangs genannten Standes der Technik überwunden, denn wegen der durchgehenden gemeinsamen Welle kann ein Lagerschild zwischen den Sub-Maschinen der elektrischen Maschine eingespart werden. Die Baugröße der elektrischen Maschine wird dabei bei gleichbleibender Leistung verringert. Zudem ergibt sich der überraschende Vorteil, dass die Lagerung der Welle nur bei einem Drehzahlunterschied zwischen den einzelnen Rotoren der elektrischen Maschine belastet wird und somit vergleichsweise fragil gestaltet werden kann. Dadurch verringert sich auch der Verschleiß, und die Lebensdauer der elektrischen Maschine wird verlängert. Schließlich wird ein Achsversatz zwischen den Rotoren praktisch ausgeschlossen.

Vorteilhafte Ausgestaltungen und Weiterbildungen der Erfindung ergeben sich nun aus den Unteransprüchen sowie aus der Beschreibung in Zusammenschau mit den Figuren.

Vorteilhaft ist es, wenn alle Rotoren auf der gemeinsamen Welle drehbar gelagert sind. Die gemeinsame Welle ist bei dieser Variante daher sowohl gegenüber dem zumindest einen Stator als auch gegenüber allen Rotoren frei drehbar. Dadurch ergibt sich ein völlig symmetrischer Aufbau der elektrischen Maschine. Die Anzahl der unterschiedlichen, für den Aufbau der Maschine benötigten Teile wird somit merkbar reduziert. Dadurch ergeben sich reduzierte Produktionskosten und reduzierte Kosten für die Ersatzteillagerung.

Vorteilhaft ist es auch, wenn ein Rotor mit der gemeinsamen Welle drehmomentfest verbunden ist und alle übrigen Rotoren auf der gemeinsamen Welle drehbar gelagert sind. Auf diese Weise ergibt sich ein einfacherer Aufbau der elektrischen Maschine, da die Lagerung zwischen einem Rotor und der gemeinsamen Welle entfällt.

Vorteilhaft ist es, wenn je einem Rotor ein Stator zugeordnet ist, wobei die Statoren unabhängig voneinander ansteuerbar sind. Auf diese Weise können die Sub-Maschinen völlig getrennt voneinander betrieben werden.

Vorteilhaft ist es zudem, wenn die elektrische Maschine genau zwei Rotoren und genau zwei Statoren umfasst. Dadurch ergibt sich eine besonders einfache Bauweise der elektrischen Maschine, da je ein Abtrieb im Bereich je eines Endes der gemeinsamen Welle vorgesehen wird.

Vorteilhaft ist es weiterhin, wenn mehreren Rotoren (genau) ein Stator zugeordnet ist. Auf diese Weise kann die elektrische Maschine unter Umständen einfacher gestaltet werden.

Besonders vorteilhaft ist es in diesem Zusammenhang, wenn die Rotoren unterschiedlich lang sind. Auf diese Weise kann die Momentenverteilung zwischen den Sub-Maschinen über eine unterschiedliche Länge der einzelnen Rotoren unter dem gemeinsamen Stator gesteuert bzw. voreingestellt werden. Dies ist insbesondere dann von Vorteil, wenn die elektrische Maschine als "Verteilerantrieb" bei einem Kraftfahrzeug eingesetzt wird, bei dem eine gewisse Momentenverteilung zwischen den einzelnen Achsen gewünscht wird (wie z.B. bei Allradfahrzeugen).

Vorteilhaft ist es auch, wenn ein Rotor mit einem Planetengetriebe, insbesondere auch mit einem mehrstufigem Planetengetriebe, gekoppelt ist. Auf diese Weise kann die Drehzahl des Rotors bei gleichzeitig sehr kompaktem Aufbau auf ein gewünschtes Niveau über- oder untersetzt werden.

Vorteilhaft ist es zudem, wenn je ein Rotor mit je zumindest einem Planetengetriebe gekoppelt ist. Auf diese Weise kann die Drehzahl aller Rotoren bei gleichzeitig sehr kompaktem Aufbau auf ein gewünschtes Niveau über- oder untersetzt werden.

Vorteilhaft ist es, wenn ein Rotor über eine auf der gemeinsamen Welle gelagerte Hohlwelle mit einem Planetengetriebe, insbesondere mit dem Sonnenrad eines Planetengetriebes verbunden ist. Dadurch kann das Drehmoment vom Rotor zum Planetengetriebe übertragen werden ohne dabei die gemeinsame Welle zu belasten. Diese kann daher sehr fragil gestaltet werden.

Vorteilhaft ist es aber auch, wenn der mit der gemeinsamen Welle fix verbundene Rotor über dieselbe mit einem Planetengetriebe, insbesondere mit dem Sonnenrad eines Planetengetriebes verbunden ist. Dadurch kann das Drehmoment vom Rotor auf sehr einfache Weise zum Planetengetriebe übertragen werden.

Besonders vorteilhaft ist es, wenn auf der gemeinsamen Welle wenigstens ein Teil eines Planetengetriebes, zum Beispiel das Hohlrad, das Sonnenrad oder der Planetenradträger drehbar gelagert ist. Auf diese Weise kann die Welle einen Mehrfachnutzen erbringen, da sie nicht nur für die Anordnung der Rotoren sondern eben auch für die Lagerung eines Teils eines Planetengetriebes verwendet wird.

Günstig ist es, wenn ein Hohlrad des Planetengetriebes drehmomentfest mit dem zumindest einen Stator verbunden ist. Damit sind sowohl das Hohlrad, welches ja das Rad mit dem größten Durchmesser in einem Planetengetriebe darstellt, und der Stator starr zueinander. Somit können sie leicht in ein gemeinsames, unter Umständen mehrteiliges Gehäuse eingebaut werden.

Besonders vorteilhaft ist es schließlich, wenn die gemeinsame Welle wenigstens eine Bohrung umfasst, welche zur Verteilung eines Schmiermittels innerhalb der elektrischen Maschine vorgesehen ist. Dadurch kann die Welle einen Doppelnutzen erfüllen. Dadurch dass die gemeinsame Welle alle Rotoren umspannt, kann das Schmiermittel auf einfache Weise praktisch in der gesamten elektrischen Maschine verteilt werden.

Vorteilhaft ist es, wenn die Antriebseinheit für ein Kraftfahrzeug als Verteilereinheit zum Antrieb mehrerer Achsen konfiguriert ist. Auf diese Weise braucht bei einem Fahrzeug mit mehreren angetriebenen Achsen nicht für jede Achse eine eigene elektrische Maschine vorgesehen werden. Bei einem Vierradantrieb reicht es beispielsweise aus, wenn eine (einzige) elektrische Maschine beide Achsen antreibt, beispielsweise indem eine Sub-Maschine die Vorderachse, die andere Submaschine die Hinterachse antreibt.

Die obigen Ausgestaltungen und Weiterbildungen der Erfindung lassen sich auf beliebige Art und Weise kombinieren.

### KURZE BESCHREIBUNG DER FIGUREN

Die vorliegende Erfindung wird nachfolgend anhand der in den schematischen Figuren der Zeichnung angegebenen Ausführungsbeispiele näher erläutert. Es zeigen dabei:
- Figur 1: eine erste Variante der erfindungsgemäßen elektrischem Maschine mit zwei auf einer gemeinsamen Welle drehbar gelagerten Rotoren und angeflanschten Planetengetrieben;
- Figur 2: eine zweite Variante der erfindungsgemäßen elektrischem Maschine mit geänderter Lagerung, sowie mit einer Ölwanne und einer Ölpumpe und
- Figur 3: eine dritte Variante der erfindungsgemäßen elektrischem Maschine, bei der einer der Rotoren drehmomentfest mit der gemeinsamen Welle verbunden ist.

### DETAILIERTE BESCHREIBUNG DER ERFINDUNG

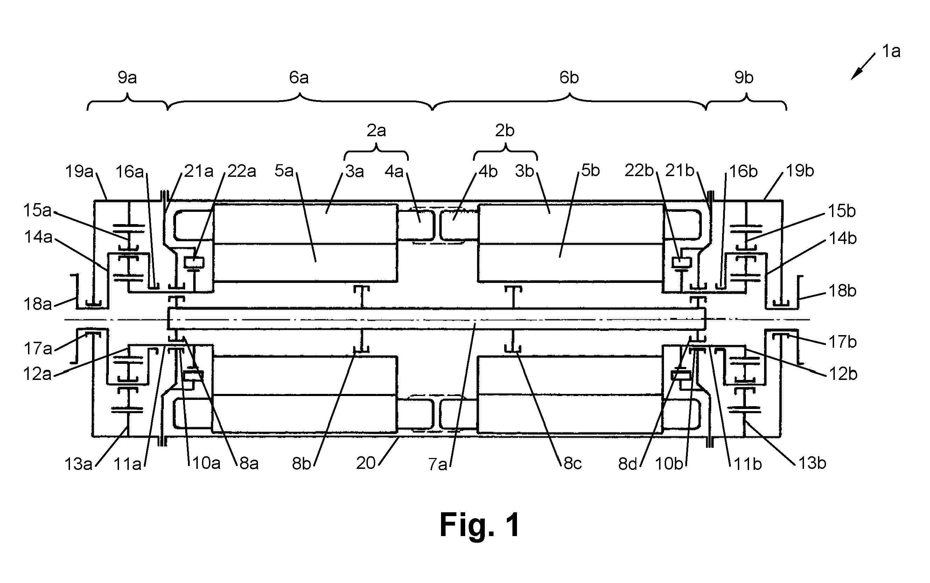

Fig. 1 zeigt schematisch den Aufbau einer ersten Variante einer erfindungsgemäßen elektrischen Maschine 1a. Diese umfasst zwei Statoren 2a und 2b, welche jeweils aus einem Statorblechpaket 3a, 3b und einer Statorwicklung 4a, 4b bestehen, sowie zwei gegenüber den Statoren 2a und 2b drehbar gelagerte und voneinander unabhängig drehbare Rotoren 5a und 5b. Der Stator 2a und der Rotor 5a sind somit Teil einer elektrischen Sub-Maschine 6a und der Stator 2b und der Rotor 5b Teil einer elektrischen Sub-Maschine 6b.

Die Statorwicklungen 4a und 4b sind in den folgenden Ausführungsbeispielen elektromagnetisch gekoppelt, was mit einer strichlierten Linie angedeutet ist. Dies ist jedoch keinesfalls zwingend für die Erfindung. Vielmehr kann eine Kopplung zwischen den Statorwicklungen 4a und 4b auch entfallen, sodass die Sub-Maschinen 6a und 6b völlig unabhängig voneinander betrieben werden können.

Die Rotoren 5a und 5b sind auf einer gemeinsamen, die Rotoren 5a und 5b umspannenden Welle 7a angeordnet und in diesem Beispiel auf dieser drehbar gelagert. Zu diesem Zweck sind auf der Welle 7a vier Lager 8a..8d angeordnet, wobei die Lager 8a und 8b den Rotor 5a und die Lager 8c und 8d den Rotor 5b tragen. Die Lager 8b und 8c sind dabei als Festlager, die Lager 8a und 8d als Loslager ausgebildet. Durch die besondere Konstruktion dieses Ausführungsbeispiels ist die gemeinsame Welle 7a außerdem sowohl gegenüber den Statoren 2a und 2b als auch gegenüber den Rotoren 5a und 5b frei drehbar.

Weiterhin sind der Rotor 5a mit einem Planetengetriebe 9a und der Rotor 5b mit einem Planetengetriebe 9b gekoppelt. Konkret ist der Rotor 5a über eine im Hauptlager 10a gelagerten Hohlwelle 11a, in welcher auch die Welle 7a gelagert ist (siehe Lager 8a), mit dem Sonnenrad 12a des Planetengetriebes 9a verbunden. Das Hohlrad 13a des Planetengetriebes 9a ist drehmomentfest mit dem Stator 2a verbunden. Weiterhin ist der Planetenradträger 14a mit den Planetenrädern 15a über das Lager 16a gegenüber der Hohlwelle 11a und über das Lager 17a gegenüber dem Getriebegehäuse 19a drehbar gelagert. Weiterhin ist mit dem Planetenradträger 14a der Abtrieb 18a des Planetengetriebes 9a verbunden.

In analoger Weise ist der Rotor 5b über eine im Hauptlager 10b gelagerten Hohlwelle 11b, in welcher auch die Welle 7a gelagert ist (siehe Lager 8d), mit dem Sonnenrad 12b des Planetengetriebes 9b verbunden. Das Hohlrad 13b des Planetengetriebes 9b ist drehmomentfest mit dem Stator 2b verbunden. Weiterhin ist der Planetenradträger 14b mit den Planetenrädern 15b über das Lager 16b gegenüber der Hohlwelle 11b und über das Lager 17b gegenüber dem Getriebegehäuse 19b drehbar gelagert. Weiterhin ist mit dem Planetenradträger 14b der Abtrieb 18b des Planetengetriebes 9b verbunden.

Im gezeigten Beispiel ist die elektrische Maschine 1a in ein Gehäuse eingebaut, welches durch die beiden Getriebegehäuse 19a und 19b sowie durch das Motorgehäuse 20 gebildet ist. Zudem bilden das Getriebegehäuse 19a und das Motorgehäuse 20 die drehmomentfeste Verbindung zwischen dem Stator 2a und dem Hohlrad 13a. Analog bilden das Getriebegehäuse 19b und das Motorgehäuse 20 die drehmomentfeste Verbindung zwischen dem Stator 2b und dem Hohlrad 13b. Zur Trennung der Sub-Maschinen 6a und 6b von den Planetengetrieben 9a und 9b sind zudem jeweils optionale Trennplatten 21a und 21b vorgesehen. Vorzugsweise sind zwischen den Sub-Maschinen 6a und 6b und den Planetengetrieben 9a und 9b zusätzlich Dichtungen 22a und 22b vorgesehen. Vorteilhaft beinhaltet das Motorgehäuse 20 wie im Beispiel dargestellt beide Sub-Maschinen 6a und 6b. Dies muss aber nicht zwingend der Fall sein.

Beispielsweise kann die elektrische Maschine 1a als Antriebseinheit für ein Kraftfahrzeug fungieren, wobei der Abtrieb 18a des Planetengetriebes 9a mit einem ersten Rad des Kraftfahrzeugs und der Abtrieb 18b des Planetengetriebes 9b mit einem zweiten Rad des Kraftfahrzeuges verbunden ist. Eine solche Antriebseinheit kann demgemäß für den Antrieb einer Achse eines Kraftfahrzeuges eingesetzt werden, beispielsweise für die Vorderachse oder die Hinterachse. Für Kraftfahrzeuge, bei denen mehrere Achsen angetrieben sind, können dementsprechend mehrere Antriebseinheiten, nämlich eine je Achse, vorgesehen sein. Denkbar ist darüber hinaus auch, dass eine Antriebseinheit mehrere Achsen antreibt, also beispielsweise als Verteilerantrieb zwischen Vorderachse und Hinterachse fungiert.

Die elektrischen Sub-Maschinen 6a und 6b können von beliebiger Bauart sein. Beispielsweise können die Statoren 2a, 2b drehfeld-erzeugende Wicklungen und die Rotoren 5a, 5b Kurzschlusskäfige umfassen, sodass zwei Asynchronmaschinen gebildet werden. Denkbar wäre beispielsweise auch, dass die Rotoren 5a, 5b permanenterregt sind, sodass zwei permanenterregte Synchronmaschinen gebildet werden. Vorstellbar wäre zudem, dass die Permanentmagneten alternativ in den Statoren 2a, 2b angeordnet sind. Schließlich wäre es auch möglich, zwei fremderregte Synchronmaschinen auszubilden.

Die Funktion der in der Fig. 1 dargestellten elektrischen Maschine 1a ist nun wie folgt, wobei angenommen wird, dass die Statoren 2a, 2b zur Erzeugung eines Drehfeldes ausgebildet und unabhängig voneinander ansteuerbar sind und die Rotoren 5a, 5b permanenterregt sind:

In an sich bekannter Weise können die Rotoren 5a und 5b durch entsprechende Ansteuerung der Statoren 2a und 2b in Drehung versetzt werden. Über die Hohlwellen 11a und 11b und die Planetengetriebe 9a und 9b wird ein Drehmoment von den Rotoren 5a und 5b an die Abtriebe 18a und 18b der Planetengetriebe 9a und 9b geleitet. Dadurch dass die Rotoren 5a und 5b unabhängig voneinander gedreht werden können, können Drehzahlunterschiede zwischen den beiden Abtrieben 18a und 18b, wie sie beispielsweise bei einer Kurvenfahrt eines mit der elektrischen Maschine 1a ausgerüsteten Kraftfahrzeugs oder auch bei Fahrt auf unterschiedlich griffigem Untergrund auftreten, ausgeglichen werden.

Aufgrund der besonderen Konstruktion der elektrischen Maschine 1a kann sich die gemeinsame Welle 7a mit den Rotoren 5a und 5b mitdrehen, sodass bei Geradeausfahrt zwischen den Rotoren 5a, 5b und der gemeinsamen Welle 7a kein Drehzahlunterschied und damit auch keine Abnutzung der Lager 8a..8d auftritt. Eine Relativdrehung zwischen den Rotoren 5a, 5b und der gemeinsamen Welle 7a tritt lediglich bei einem Drehzahlunterschied zwischen den Rotoren 5a und 5b, also zum Beispiel bei Kurvenfahrt oder wegen einem aufgrund von rutschigem Untergrund durchdrehenden Rad auf. Demgemäß werden die Lager 8a..8d nur in diesem Betriebszustand abgenutzt und können daher entsprechen fragil ausgebildet werden. Zudem werden Axialkräfte, welche aus einer Schrägverzahnung des Planetengetriebes 9a, 9b von der Welle 7a aufgenommen.

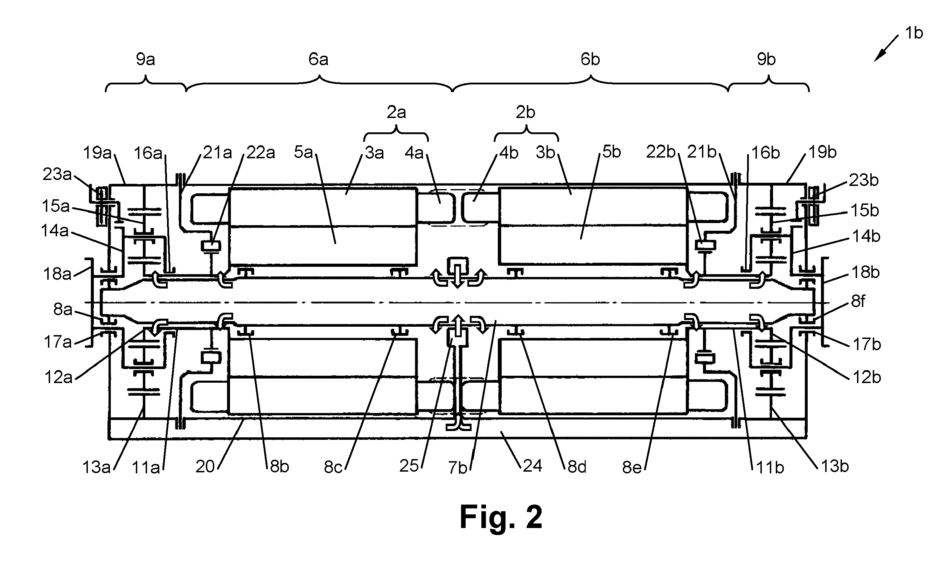

Fig. 2 zeigt nun eine weitere Variante der Erfindung in Form einer elektrischen Maschine 1b, welche der elektrischen Maschine 1a sehr ähnlich ist. Zusätzlich zu den für die elektrischen Maschine 1a verwendeten Bauteilen umfasst die elektrischen Maschine 1b jedoch Parkbremsen 23a und 23b, welche in die Planetenradträger 14a und 14b eingreifen, sowie eine Ölwanne 24 und eine Ölpumpe 25. Die gemeinsame Welle 7b der elektrische Maschine 1b umfasst in diesem Beispiel wenigstens eine Bohrung (nicht dargestellt), welche zur Verteilung eines Schmiermittels innerhalb der elektrischen Maschine 1b vorgesehen ist. Der Kreislauf des Schmiermittels ist dabei mit Pfeilen symbolisiert. Selbstverständlich könnte auch die elektrische Maschine 1a eine ähnliche Schmierung aufweisen.

Ein weiterer Unterschied zur elektrischen Maschine 1b besteht darin, dass die Welle 7b nicht nur mit vier Lagern 4a..4d, sondern mit sechs Lagern 4a..4e gelagert ist. Darüber hinaus entfallen die Lager 10a und 10b, sodass die einzigen Lager, die bei Geradeausfahrt einen Drehzahlunterschied erfahren, die Lager 17a und 17b sind. Deren Drehzahl ist aber wegen der Untersetzung der Planetengetriebe 9a und 9b geringer als die der Lager 10a und 10b, sodass die Lager 17a und 17b bei dieser Ausführungsvariante kleiner dimensioniert werden können beziehungsweise weniger verschleißen.

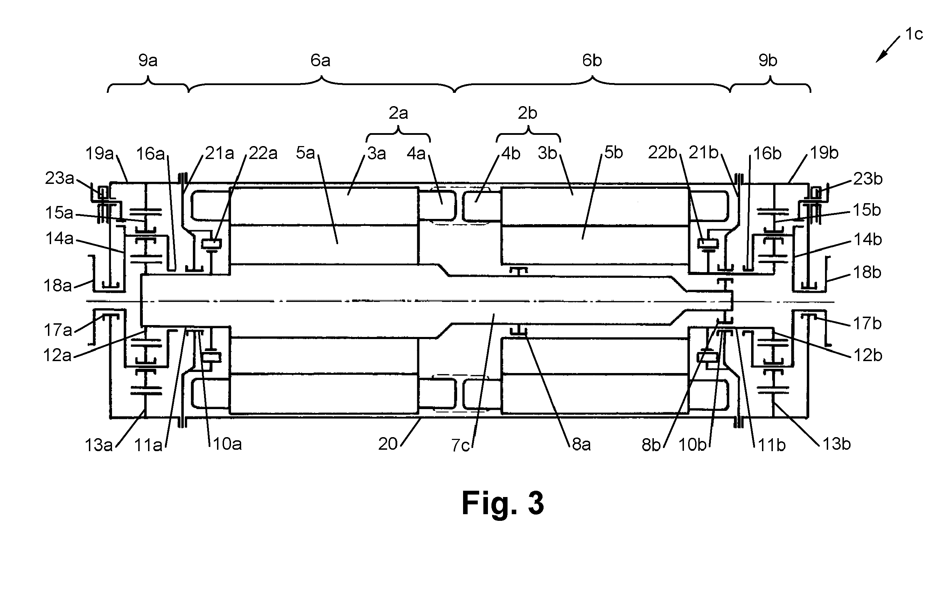

Fig. 3 zeigt nun eine weitere Variante der Erfindung in Form einer elektrischen Maschine 1c, welche wiederum der elektrischen Maschine 1a sehr ähnlich ist. Zusätzlich ist wieder eine Parkbremse 23a und 23b vorgesehen. Zudem ist die Welle 7c etwas anders aufgebaut, und zwar ist ein Rotor, nämlich der Rotor 5a, drehmomentfest mit der gemeinsamen Welle 7c verbunden. Der Rotor 5b ist dagegen wie bei der elektrischen Maschine 1a drehbar auf der gemeinsamen Welle 7c gelagert. Über die Welle 7c ist der Rotor 5a somit mit dem Planetengetriebe 9a, konkret mit dem Sonnenrad 12a des Planetengetriebes 9a verbunden.

Auch bei dieser Variante der Erfindung dreht sich die gemeinsame Welle 7c mit dem Rotor 5b bei Geradeausfahrt mit, sodass zwischen dem Rotor 5b und der gemeinsamen Welle 7c kein Drehzahlunterschied und damit auch keine Abnutzung der Lager 8a, 8b auftritt. Eine Relativdrehung zwischen dem Rotor 5b und der gemeinsamen Welle 7c tritt lediglich bei einem Drehzahlunterschied zwischen den Rotoren 5a und 5b, also zum Beispiel bei Kurvenfahrt oder wegen einem aufgrund von rutschigem Untergrund durchdrehenden Rad auf. Demgemäß werden die Lager 8a, 8b nur in diesem Betriebszustand abgenutzt und können daher entsprechen fragil ausgebildet werden.

Zusätzlich zu den oben angeführten Ausführungsvarianten der Erfindung ist noch eine Fülle an zusätzlichen Varianten denkbar. Beispielsweise kann das angegebene Prinzip auch auf mehr als zwei Rotoren ausgedehnt werden, die alle auf einer gemeinsamen Welle 7a..7c gelagert sind. Die Drehung der Rotoren könnte dabei beispielsweise über ineinander geschachtelte und konzentrisch angeordnete Hohlwellen nach außen geführt werden.

Zudem ist vorstellbar, dass die elektrische Maschine 1a..1c nur einen gemeinsamen Stator aufweist, was besonders vorteilhaft ist, wenn die elektrische Maschine 1a..1c als Asynchronmaschine oder fremderregte elektrische Maschine ausgeführt ist. Um die Sub-Maschinen 6a und 6b unabhängig voneinander betreiben zu können ist es dann aber von Vorteil, wenn der gemeinsame Stator im Falle von Synchronmaschinen statisch erregt wird (permanenterregt oder fremderregt) und die Rotoren 5a und 5b entsprechend angesteuert werden. Werden die Rotoren 5a und 5b im Falle einer Asynchronmaschine als Kurzschlusskäfige ausgebildet, so sind diese zwar wegen des gemeinsamen Stators nicht unabhängig voneinander ansteuerbar, dennoch kann ein Drehzahlunterschied, wie er beispielsweise bei Kurvenfahrt auftritt, ausgeglichen werden.

Vorteilhaft kann bei Vorsehen eines gemeinsamen Stators auch die Momentenverteilung zwischen den Sub-Maschinen 6a und 6b über die Rotorlänge (unterschiedliche Länge der einzelnen Rotoren 5a und 5b unter dem gemeinsamen Stator) gesteuert bzw. sozusagen voreingestellt werden. Dies ist insbesondere für die Anwendung der Erfindung als "Verteilerantrieb" von Vorteil, bei dem eine gewisse Momentenverteilung zwischen Vorderachse und Hinterachse gewünscht wird (wie z.B. bei Allradfahrzeugen).

Denkbar ist weiterhin, dass die elektrische Maschine 1a..1c nur ein Planetengetriebe 9a, 9b oder auch gar kein Planetengetriebe 9a, 9b aufweist. Zudem ist vorstellbar, dass die Planetengetriebe 9a, 9b mehrstufig ausgeführt sind. Selbstverständlich kann auch jede andere Art eines Getriebes zwischen einem Rotor 5a, 5b und den Abtrieb 18a, 18b angeordnet sein, beispielsweise ein Stirnradgetriebe, ein Schneckengetriebe oder ein Riemengetriebe.

Abschließend wird festgehalten, dass die Bestandteile der Figuren 1 bis 3 unter Umständen nicht maßstabsgetreu dargestellt sind. Eine real ausgeführte elektrische Maschine 1a..1c kann zudem mehr Bauteile als dargestellt umfassen oder auch weniger. Lageangaben wie "rechts", "links", "oben", "unten" und dergleichen beziehen sich auf die dargestellte Lage des jeweiligen Bauteils und sind bei Änderung der genannten Lage gedanklich entsprechend anzupassen.

## Patentansprüche

1. Elektrische Maschine (1a..1c), umfassend:
- wenigstens einen Stator (2a, 2b) und
- zumindest zwei gegenüber dem Stator (2a, 2b) drehbar gelagerte und voneinander unabhängig drehbare Rotoren (5a, 5b),
**dadurch gekennzeichnet, dass**
die Rotoren (5a, 5b) auf einer gemeinsamen, alle Rotoren (5a, 5b) umspannenden Welle (7a..7c) angeordnet sind.

2. Elektrische Maschine (1a..1c) nach Anspruch 1, **dadurch gekennzeichnet, dass** alle Rotoren (5a, 5b) auf der gemeinsamen Welle (7a..7c) drehbar gelagert sind.

3. Elektrische Maschine (1c) nach Anspruch 1, **dadurch gekennzeichnet, dass** ein Rotor (5a) mit der gemeinsamen Welle (7c) drehmomentfest verbunden ist und alle übrigen Rotoren (5b) auf der gemeinsamen Welle (7c) drehbar gelagert sind.

4. Elektrische Maschine (1a..1c) nach einem der Ansprüche 1 bis 3, **dadurch gekennzeichnet, dass** je einem Rotor (5a, 5b) ein Stator (2a, 2b) zugeordnet ist, wobei die Statoren (2a, 2b) unabhängig voneinander ansteuerbar sind.

5. Elektrische Maschine (1a..1c) nach Anspruch 4, **gekennzeichnet durch** genau zwei Rotoren (5a, 5b) und genau zwei Statoren (2a, 2b).

6. Elektrische Maschine (1a..1c) nach einem der Ansprüche 1 bis 3, **dadurch gekennzeichnet, dass** mehreren Rotoren (5a, 5b) ein Stator (2a, 2b) zugeordnet ist.

7. Elektrische Maschine (1a..1c) nach Anspruch 6, **dadurch gekennzeichnet, dass** die Rotoren (5a, 5b) unterschiedlich lang sind.

8. Elektrische Maschine (1a..1c) nach einem der Ansprüche 1 bis 7, **dadurch gekennzeichnet, dass** ein Rotor (5a, 5b) mit einem Planetengetriebe (9a, 9b) gekoppelt ist.

9. Elektrische Maschine (1a..1c) nach Anspruch 8, **dadurch gekennzeichnet, dass** je ein Rotor (5a, 5b) mit je zumindest einem Planetengetriebe (9a, 9b) gekoppelt ist.

10. Elektrische Maschine (1a..1c) nach Anspruch 8 oder 9, **dadurch gekennzeichnet, dass** ein Rotor (5a, 5b) über eine auf der gemeinsamen Welle (7a..7c) gelagerten Hohlwelle (11a, 11b) mit einem Planetengetriebe (9a, 9b) verbunden ist.

11. Elektrische Maschine (1c) nach einem der Ansprüche 3 bis 5 und 8 bis 10, **dadurch gekennzeichnet, dass** der mit der gemeinsamen Welle (7c) fix verbundene Rotor (5a) über dieselbe mit einem Planetengetriebe (9a) verbunden ist.

12. Elektrische Maschine (1a..1c) nach einem der Ansprüche 8 bis 11, **dadurch gekennzeichnet, dass** auf der gemeinsamen Welle (7a..7c) wenigstens ein Teil (12a, 12b) eines Planetengetriebes (9a, 9b) drehbar gelagert ist.

13. Elektrische Maschine (1a..1c) nach einem der Ansprüche 8 bis 12, **dadurch gekennzeichnet, dass** ein Hohlrad (13a, 13b) des Planetengetriebes (9a, 9b) drehmomentfest mit dem zumindest einen Stator (2a, 2b) verbunden ist.

14. Elektrische Maschine (1a..1c) nach einem der vorstehenden Ansprüche, **dadurch gekennzeichnet, dass** die gemeinsame Welle (7a..7c) wenigstens eine Bohrung umfasst, welche zur Verteilung eines Schmiermittels innerhalb der elektrischen Maschine (1a..1c) vorgesehen ist.

15. Antriebseinheit für ein Kraftfahrzeug, **gekennzeichnet durch** eine elektrische Maschine (1a..1c) nach einem der Ansprüche 1 bis 14, welche zum Antrieb von wenigstens zwei Rädern des Kraftfahrzeugs konfiguriert ist.

16. Antriebseinheit nach Anspruch 15, **dadurch gekennzeichnet, dass** diese als Verteilereinheit zum Antrieb mehrerer Achsen des Kraftfahrzeugs konfiguriert ist.

17. Kraftfahrzeug mit mehreren Rädern, **gekennzeichnet durch** zumindest eine elektrische Maschine (1a..1c) nach einem der Ansprüche 1 bis 14, welche zum Antrieb von wenigstens zwei Rädern des Kraftfahrzeugs konfiguriert ist.

18. Kraftfahrzeug nach Anspruch 17, **dadurch gekennzeichnet, dass** die zumindest eine elektrische Maschine (1a..1c) als Verteilereinheit zum Antrieb mehrerer Achsen des Kraftfahrzeugs konfiguriert ist.
